# EUROPEAN PATENT SPECIFICATION

(11) **EP 1 235 062 B1**
(45) Date of publication and mention of the grant of the patent: **31.03.2004**
(21) Application number: 01128563.2
(22) Date of filing: 30.11.2001
(51) Int. Cl.: G01M 11/00

(54) **Measurement of multi-port optical devices**
Messung optischer Multi-Port Vorrichtungen
Mesure de dispositifs optiques multiport

(43) Date of publication of application: 28.08.2002
(73) Proprietor: Agilent Technologies, Inc. (a Delaware corporation), Palo Alto, CA 94303 (US)
(72) Inventor: Stadler, Dietmar, 71034 Breitenstein (DE)
(74) Representative: Barth, Daniel Mathias

(56) References cited:
- DE-A- 3 724 334

## Description

### BACKGROUND OF THE INVENTION

The present invention relates to the measurement of multi-port optical devices such as switches, cross-connects, etc.

Testing optical multi-port devices such as cross-connects for connecting a plurality of outputs with a plurality of inputs has become an increasingly important task for modem optical telecommunication industry. Since such multi-port devices offer a wide variety of different connection options, testing or verifying each option and also measuring optical properties or unwanted side effects can become extremely time intensive. Considering e.g. an nxn-cross connect (with n inputs and n outputs), each of the 2ⁿ or even n! switch possibilities should be tested.

A device for testing optical multi-port devices is known from DE3724334A1.

### SUMMARY OF THE INVENTION

It is an object of the present invention to provide an improved testing for multi-port optical devices. The object is solved by the independent claims. Preferred embodiments are shown by the dependent claims.

According to the present invention, an optical device under test (DUT) having m inputs (with m = 1, 2, 3, ..., M) and n outputs (with n = 1, 2, 3, ..., N) is tested by applying a plurality of different characteristic stimulus signals to at least one of the m inputs. A response signal received at at least one of the n outputs is provided to an evaluation unit together with the applied stimulus signals or at least an indication thereof. The evaluation unit determines from the received response signals and the stimulus indication a property of the DUT, such as an optical property (e.g. in insertion loss, crosstalk, or isolation) or a verification of a device property (e.g. a connection between different paths or input and outputs, a switch matrix, etc.).

The stimulus signals have to be provided in a way allowing tracing each respectively applied stimulus signal in a received response signal - if present e.g. beyond detectability thresholds. The term tracing shall mean identifying at least a portion of the applied stimulus signal in a received response signal, and might also covering a quantitative analysis of the identified portion with respect to the applied stimulus signal.

The term indication of an applied stimulus signal shall mean any kind of representative information rendering possible to trace this stimulus signal in the response signal.

Preferably, each stimulus signal provides a unique feature allowing to unambiguously identify each stimulus signal - or parts thereof - in each received response signal. This capability of tracing portions of each applied characteristics stimulus signal in each of the received response signals allows to apply multiple stimulus signals concurrently or at least substantially concurrently, thus allowing significantly reduced testing time.

In one embodiment each stimulus signal comprises a carrier portion and an identification portion. At least one of the carrier portion or the identification portion comprises a unique feature allowing to unambiguously identify each stimulus signal - or parts thereof - in each received response signal. In one embodiment, the carrier portion is the same, or substantially the same, for all or some of the applied stimulus signals, however, varying carrier portions might be applied as well. The unique portions have to be selected in a way that they can be clearly and unambiguously traced in the response signal(s). In other words, the tracing or identification scheme provided for evaluating the response signal(s) has to be adapted to the type of identification as applied for in the identification portions.

Whereas substantially any adequate identification scheme for providing the unique identification portion can be applied, it has been found that in particular modulation (e.g. intensity, amplitude, phase, or frequency modulation) can provide a very effective tracing, in particular suitable when detecting the response signal(s) with standard power meters providing sensibility mainly with respect to applied optical power. However, other identification schemes such as coding (e.g. with unique data content) etc. can be applied as well.

While the carrier portion of the stimulus signals might be substantially the same and even be derived from the same source, same applications might require different carrier portions. In particular in case the DUT provides different paths (e.g. transmission paths) for different wavelengths, different carrier portions at different wavelengths can be applied.

In a preferred embodiment wherein the DUT comprises at least two inputs, two or more (and preferably all) of the inputs each receives a different stimulus signal having a common carrier portion but a unique identification portion.

In another preferred embodiment wherein the DUT has at least one carrier sensitive input (e.g. the behavior of the DUT depends on the applied carrier portion), the carrier sensitive input will receive at least two different stimulus signals, each having a different carrier portion and/or a different unique identification portion. In an example with a DUT having different transmission paths for different wavelengths, each carrier portion concurrently applied comprises a carrier portion at a different wavelength.

In one embodiment, the carrier of a plurality of stimulus signals comprises a plurality of different carrier portions, but each applied stimulus signals has a different unique identification portion. This can be achieved e.g. by applying a broadband source already providing the plurality of different carrier portions.

In one preferred embodiment, the unique identification portion of each stimulus signal is provided by applying a modulation scheme as known in the art. Preferably, an amplitude modulation is provided by modulating a carrier signal representing the carrier portion. The amplitude modulation can be provided by modulating the intensity of the carrier signal. The response signals can be detected employing conventional power meters (e.g. with photo diodes) for converting the received optical signals into electrical signals. The evaluation unit can apply various evaluation methods as known in the art for tracing unique identification portions, or parts thereof, in each received response signal. Thus and with the knowledge about each different stimulus signal and their distribution to the DUT input(s), the evaluation unit can determine the requested property of the DUT (e.g. as insertion loss of the each transmission path, crosstalk or isolation between different transmission paths, or verification of a connection scheme (expected or unexpected) between inputs and outputs.

Preferred examples of evaluation methods in time domain are synchronous demodulation, correlation, regression algorithms (e.g. 3 parameter fit). Preprocessing methods like transfer on intermediate frequency (ZF) or filter banks can be applied in addition or alternatively. In frequency domain, e.g. Fourier transformation (e.g. Fast Fourier Transformation - FFT) or correlation can be applied. However, it is clear that other or multiple evaluation methods can be applied accordingly.

Amplitude modulation is in particular useful since the conversion from optical to electrical signals as provided by most commonly available detectors (e.g. photodiodes) is generally very sensitive to variations in the intensity but normally less sensitive to wavelength variations in the optical signal.

In a preferred embodiment applying amplitude modulation, the modulation frequency range preferably covers the sub-ultrasonic range, preferably in the range of smaller than 100MHz. However, the application of modulation frequency ranges is generally only limited by the bandwidth of involved components. When applying state of the art technology, the most limiting factor will be the device for measuring light intensity with a given input bandwidth (e.g. the photo diode). The maximum modulation frequency is therefor limited generally to Fmax <= Fs/4, where Fs is the sampling rate of the power values, Fmax is the highest preferred modulation frequency. The input bandwidth of an employed powermeter is generally roughly in the range of Fs/4.

The at least two different characteristic stimulus signals are preferably applied in parallel, e.g. concurrently or at least substantially concurrently (i.e. within a short period of time). It is to be understood the provision of stimulus signals according to the invention which are independently traceable within each received response signal allows to provide such stimulus signals in parallel. This allows to significantly reduce testing time in particular when testing mxn devices with high number of inputs and/or outputs or when the device provides a high number of possible connections to be tested. It is clear, however, that the stimulus signals can also be provided sequentially or in a pseudo parallel mode.

The invention has found to be in particular useful for testing optical multi-port devices such as optical cross connectors, optical switches, or switch fabrics, in particular when reaching a high number of inputs and/or outputs. In case of a switch with m inputs and n outputs, wherein a transmission path between one input and one output can either be closed or opened, one measurement with concurrently applying different stimulus signals at each of the m inputs and all transmission paths being connected will generally be sufficient e.g. for providing loss or crosstalk measurements of the entire switch. In case of an optical cross connect for routing each one of m inputs to a selectable one of n outputs, providing m measurements will generally be sufficient accordingly. However, it is clear that any mxn multi-port device can be tested using the invention.

It is clear that the invention can be partly or entirely embodied or supported by one or more suitable software programs, which can be stored on or otherwise provided by any kind of data carrier, and which might be executed in or by any suitable data processing unit. Software programs or routines are preferably applied for controlling the application and/or provision of the stimulus signals (e.g. controlling one or more signal sources and/or modulation units), or for evaluating the response signals (e.g. by the evaluation unit).

### BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).

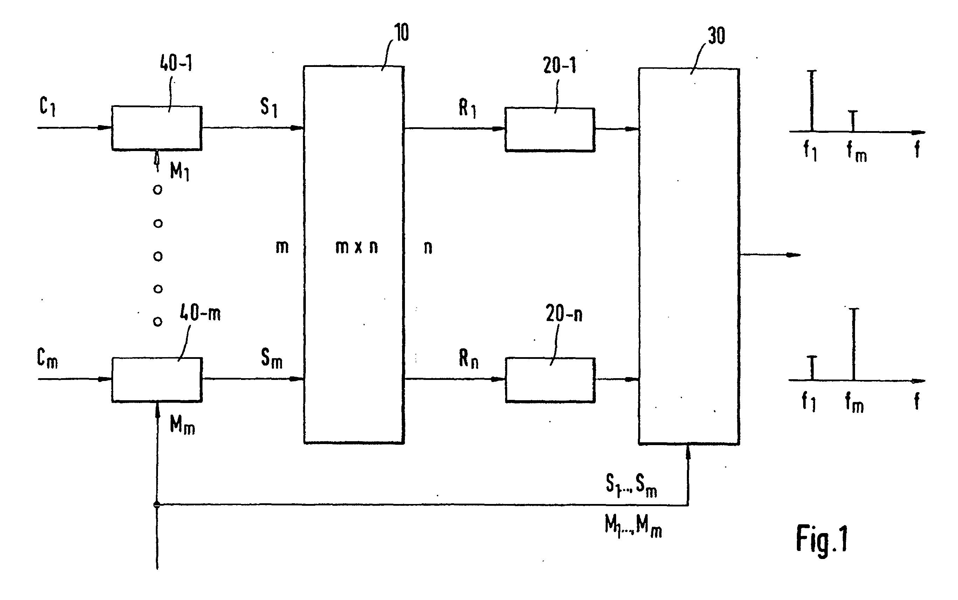

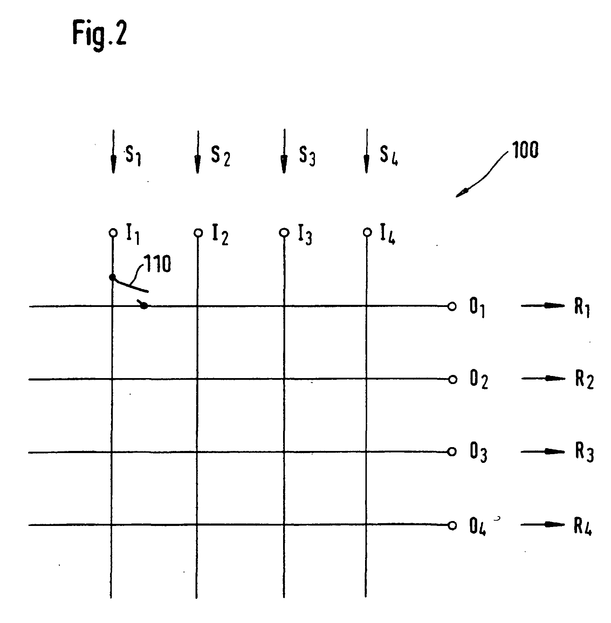

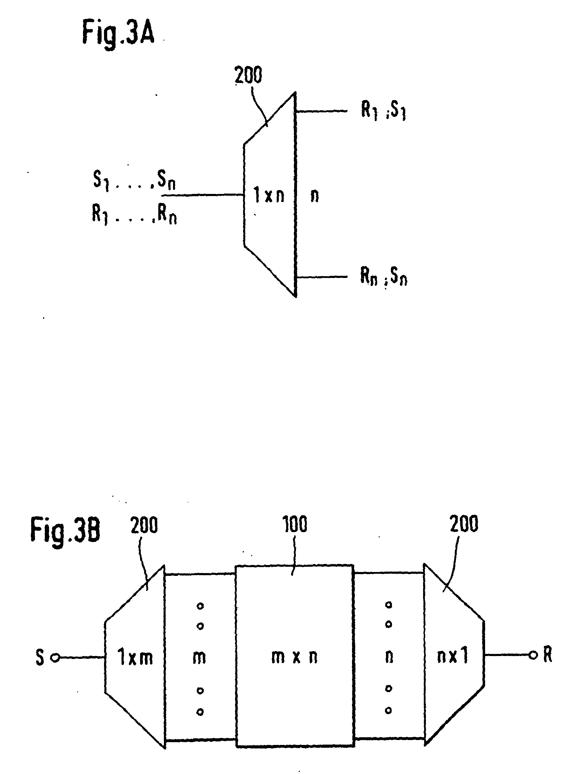

Figure 1 illustrates a preferred embodiment of the present invention. Figure 2 depicts a fast method for testing an optical switch fabric, and Figs. 3 illustrates other testing schemes.

### DETAILED DESCRIPTION OF THE INVENTION

In Figure 1, a device under test (DUT) 10 with m inputs and n outputs is to be tested (with m, n = 1, 2, 3, ..., N). Each of the m inputs receives a different and characteristic stimulus signal Sᵢ (with i = 1, 2, 3, ..., m) and each of the n outputs provides a response signal Rⱼ (with j= 1, 2, 3, .... n). Each response signal Rⱼ is received by a respective detector 20-j, and the detected response signals are provided to an evaluation unit 30. The evaluation unit 30 further receives each stimulus signal Sᵢ, or at least an indication of each stimulus signal Sᵢ allowing to unambiguously identifying each applied stimulus signal Sᵢ (or a corresponding portion thereof) in the response signals Rⱼ.

In operation, all stimulus signals Sᵢ are applied in parallel (preferably concurrently) to the DUT 10, and the resulting response signals Rⱼ are detected by each respective detector 20-j and provided to the evaluation unit 30. Making use of the knowledge about the unique character of each stimulus signal Sᵢ, the evaluation unit 30 will evaluate the response signals Rⱼ in order to derive at least one optical property of the DUT 10. Such optical properties can be - for example - insertion loss, crosstalk, isolation, or a verification of an expected transmission path between input and output.

In a preferred embodiment, each stimulus signal Sᵢ is provided by a respective modulation unit 40-i. Each modulation unit 40-i receives a carrier signal Cᵢ and a modulation signal Mᵢ and provides therefrom the stimulus signal Sᵢ.

In a preferred embodiment, each modulation unit 40-i provides an amplitude modulation for modulating the light intensity of the applied carrier signal Cᵢ. In this embodiment, the carrier signals Cᵢ can all be the same or at least substantially the same and might even be derived from the same source. In that case, it can be sufficient to provide only the modulation signals Mᵢ, or a corresponding indication or representation thereof such as a modulation frequency fᵢ, as indication for each unique stimulus signal Sᵢ.

In the embodiment applying amplitude modulation, the detectors 20-j can be embodied e.g. by conventional photodiodes. The evaluation unit 30 will then detect frequency portions fᵢ in each one of the response signals Rⱼ. The right side of Figure 1 illustrates an example with detected frequency portions f₁ and fₘ resulting from the stimulus signals S₁ and Sₘ Dependent on the application, the evaluation unit 30 might determine insertion loss, isolation or crosstalk by processing the intensities of the received frequency portions in combination with each other. Such processing is well known in the art and need not be explained herein in detail. Typical algorithms can be correlation or Fourier transformation (e.g. using Fast Fourier Transformation) in frequency domain, or e.g. synchronous demodulation, correlation, regression algorithms like 3 parameter fit (they could additionally be combined with preprocessing methods like transfer on intermediate frequency (ZF) or filter banks).

A preferred embodiment for testing a switch fabric 100 is depicted with respect to Figure 2 representing a generic model in particular for so-called 3D Mems. The optical switch fabric 100 in this embodiment shall have four inputs I₁, I₂, I₃, and I₄ and four outputs O₁, O₂, O₃ or O₄. It is clear, however, that the number of inputs and outputs is not limited. Each one of the inputs can be connected to either one of the outputs. A potential connection e.g. between input I₁ and output O₁ is indicated in Figure 2 by a switch 110. It goes without saying that any other connection can be provided accordingly.

For testing the switch fabric 100, four measurements each with concurrently applying different characteristic stimulus signals S₁-S₄ to the inputs I₁ - I₄ are provided. The corresponding response signals R₁ - R₄ are measured at the outputs O₁ - O₄. Each measurement preferably measures one line of the matrix connection structure of the switch fabric 100. This explains the number of four measurements in the 4x4-switch fabric example of Figure 2. Accordingly an mxm switch fabric requires at least m measurements.

Figure 3A illustrates the principles for testing a multiplexing or demultiplexing device 200. Whether the device 200 is provided as multiplexer or demultiplexer depends on the direction for operating the device 200, or in other words whether signals (in Fig. 3A) are applied from the left (multiplexer) or the right (demultiplexer) side.

In its multiplexing mode, the device 200 has one input but n outputs. A signal applied at the input (left side) of the device 200 will be provided to one or more of its n outputs (right side) dependent on its configuration and the wavelength(s) of the input signal. For testing the device 200 a plurality of stimulus signals, each with different wavelength of the carrier signal and a different unique identification portion, will be concurrently provided to the its input. The response signals Rⱼ are detected and analyzed in accordance with the above said. For testing the device 200 in its multiplexing mode, the stimulus signal Sⱼ are provided from the right side in Figure 3A and the signal responses Rⱼ are detected at the left side of the device 200.

The same principles as illustrated with respect to Figure 3A for testing the multiplexing / demultiplexing device 200 can also be applied for testing an optical cross connect as shown in Fig. 3B. The optical cross connect comprises a 1xm multiplexing device 200 for multiplexing one input to m outputs, an mxn switch fabric 100 for switching m inputs to n outputs, and an nx1 demultiplexing device 200 for demultiplexing n inputs to 1 output.

## Claims

1. A system adapted for determining or verifying a property of an optical device under test - DUT - (10) having m inputs, with m = 1, 2, 3, ..., M, and n outputs, with n = 1, 2, 3, ..., N, wherein a plurality of different characteristic stimulus signals (Si) are applied to at least one of the m inputs, the system comprising:
a signal receiving unit (20) adapted for receiving a response signal (Ri) at at least one of the n outputs, and
an evaluation unit (30) adapted for determining or verifying the property of the DUT (10) by evaluating the received response signal in conjunction with at least one of the applied stimulus signals (Si) or at least an indication thereof,
wherein each characteristic stimulus signal (Si) has a unique feature allowing to trace and unambiguously identify each stimulus signal - or parts thereof - in each received response signal - if present or beyond a detectability threshold.

2. The system of claim 1, wherein the evaluation unit (30) is adapted for identifying at least a portion of the applied stimulus signal in each received response signal.

3. The system of claim 2, wherein the evaluation unit (30) is adapted for providing a quantitative analysis of the identified portion with respect to the applied stimulus signal.

4. A system adapted for testing an optical device under test - DUT - (10) having m inputs, with m = 1, 2, 3, ..., M, and n outputs, with n = 1, 2, 3, ..., N, the system comprising:
a signal application unit (40) adapted for applying a plurality of different characteristic stimulus signals (Si) to at least one of the m inputs,
the system of claim 1 or any one of the claims 2-3 for determining or verifying a property of the DUT (10),
wherein each characteristic stimulus signal (Si) has a unique feature allowing to trace and unambiguously identify each stimulus signal - or parts thereof - in each received response signal - if present or beyond a detectability threshold.

5. The system of claim 4, wherein the signal application unit (40) is adapted for executing at least one of:
applying a plurality of different characteristic stimulus signals (Si) each having a carrier portion and/or an identification portion, with at least one of the carrier portion or the identification portion comprising a unique feature allowing to unambiguously identify each stimulus signal - or parts thereof - in each received response signal,
providing a modulation or coding for generating the plurality of different characteristic stimulus signals (Si),
providing at least some of the plurality of different characteristic stimulus signals (Si) in parallel, preferably concurrently or at least substantially concurrently.

6. A system adapted for testing an optical device under test - DUT - (10) having m inputs, with m = 1, 2, 3, ..., M, and n outputs, with n = 1, 2, 3, ..., N, the system comprising:
a signal application unit (40) adapted for applying a plurality of different characteristic stimulus signals (Si) to at least one of the m inputs,
a signal receiving unit (20) adapted for receiving a response signal (Ri) at at least one of the n outputs, and
an evaluation unit (30) adapted for determining or verifying a property of the DUT (10) by evaluating the received response signal in conjunction with at least one of the applied stimulus signals (Si) or at least an indication thereof,
wherein each characteristic stimulus. signal (Si) has a unique feature allowing to trace and unambiguously identify each stimulus signal - or parts thereof - in each received response signal - if present or beyond a detectability threshold.

7. The system of claim 6, wherein the evaluation unit (30) is adapted for executing at least one of:
identifying at least a portion of the applied stimulus signal in each received response signal, and
providing a quantitative analysis of the identified portion with respect to the applied stimulus signal.

8. The system of claim 6 or 7, wherein the signal application unit (40) is adapted for executing at least one of:
applying a plurality of different characteristic stimulus signals (Si) each having a carrier portion and/or an identification portion, with at least one of the carrier portion or the identification portion comprising a unique feature allowing to unambiguously identify each stimulus signal - or parts thereof - in each received response signal,
providing a modulation or coding for generating the plurality of different characteristic stimulus signals (Si),
providing at least some of the plurality of different characteristic stimulus. signals (Si) in parallel, preferably concurrently or at least substantially concurrently.

9. A method for determining or verifying a property of an optical device under test - DUT - (10) having m inputs, with m = 1, 2, 3, ..., M, and n outputs, with n = 1, 2, 3, ..., N, comprising the steps of:
(a) receiving a response signal (Ri) at at least one of the n outputs in response to a plurality of different characteristic stimulus signals (Si) applied to at least one of the m inputs, and
(b) determining or verifying a property of the DUT (10) by evaluating the received response signal in conjunction with at least one of the applied stimulus signals (Si) or at least an indication thereof,
wherein each characteristic stimulus signal (Si) has a unique feature allowing to trace and unambiguously identify each stimulus signal - or parts thereof - in each received response signal - if present or beyond a detectability threshold.

10. A method for testing an optical device under test - DUT - (10) having m inputs, with m = 1, 2, 3, ..., M, and n outputs, with n = 1, 2, 3, ..., N, comprising the steps of:
(a) applying a plurality of different characteristic stimulus signals (Si) to at least one of the m inputs,
(b) receiving a response signal (Ri) at at least one of the n outputs, and
(c) determining or verifying a property of the DUT (10) by evaluating the received response signal in conjunction with at least one of the applied stimulus signals (Si) or at least an indication thereof.
wherein in step (a) each characteristic stimulus signals (Si) has a unique feature allowing in step (c) tracing and unambiguously identifying each respectively applied stimulus signal (Si) in each received response signal (Ri) - if present or beyond a detectability threshold.

11. The method of claim 10, wherein step (a) comprises a step of unambiguously modulating or coding each stimulus signals (Si).

12. The method of claim 10 or 11, wherein in step (a) at least some of the plurality of different characteristic stimulus signals (Si) are provided in parallel, preferably concurrently or at least substantially concurrently.

## Patentansprüche

1. Ein System, das angepasst ist zum Ermitteln oder Überprüfen einer Eigenschaft einer zu testenden optischen Vorrichtung -DUT- (10) mit m Eingängen, mit m = 1,2,3,..., M, und n Ausgängen mit n = 1,2,3,..., N, wobei eine Vielzahl verschiedener charakteristischer Stimulus-Signale (SI) an mindestens einen der m Eingänge angelegt werden, wobei das System folgendes aufweist:
eine Signalempfangseinheit (20), die angepasst ist zum Empfangen eines Antwortsignals (Ri) an mindestens einem der n Ausgänge, und
einer Evaluierungseinheit (30), die angepasst ist zum Ermitteln oder Überprüfen der Eigenschaft der DUT (10) durch Evaluieren des empfangenen Antwortsignals in Verbindung mit mindestens einem der angelegten Stimulus-Signale (Si) oder zumindest einer Indikation davon,
wobei jedes charakteristische Stimulus-Signal (Si) ein einzigartiges Merkmal aufweist, welches es ermöglicht, jedes Stimulus-Signal - oder Teile davon - in jedem empfangenen Antwortsignal nachzuverfolgen und eindeutig zu identifizieren, wenn es vorhanden oder jenseits einer Detektionsschwelle ist.

2. Das System nach Anspruch 1, wobei die Evaluierungseinheit (30) angepasst ist, zumindest einen Teil des angelegten Stimulus-Signals in jedem empfangenen Antwortssignal zu identifizieren.

3. Das System nach Anspruch 2, wobei die Evaluierungseinheit (30) angepasst ist, eine quantitative Analyse des identifizierten Teils im Hinblick auf das angelegte Stimulus-Signal zu liefern.

4. Ein System, das angepasst ist, eine zu testende optische Vorrichtung - DUT - (10) mit m Eingängen, mit m = 1,2,3,..., M, und n Ausgängen, mit n = 1,2,3,...,N, zu testen, wobei das System folgendes aufweist:
eine Signalanlegeeinheit (40), die angepasst ist, eine Vielzahl von verschiedenen charakteristischen Stimulus-Signalen (Si) an mindestens einen der m Eingänge anzulegen,
das System nach Anspruch 1 oder einem der Ansprüche 2-3 zum Ermitteln oder Überprüfen einer Eigenschaft der DUT (10),
wobei jedes charakteristische Stimulus-Signal (Si) ein einzigartiges Merkmal aufweist, welches es ermöglicht, jedes Stimulus-Signal - oder Teile davon - in jedem empfangenen Antwortsignal nachzuverfolgen und eindeutig zu identifizieren, wenn es vorhanden oder jenseits einer Detektionsschwelle ist.

5. Das System nach Anspruch 4, wobei die Signalanlegeeinheit (40) angepasst ist, mindestens einen der folgenden Schritte auszuführen:
Anlegen einer Vielzahl von verschiedenen charakteristischen Stimulus-Signalen (Si), jedes mit einem Träger-Anteil und /oder einem Identifkations-Anteil, wobei mindestens der Träger-Anteil oder der Identifikationsanteil ein einzigartiges Merkmal aufweist, welches es ermöglicht, jedes Stimulus-Signal - oder Teile davon - in jedem empfangenen Antwortsignal eindeutig zu identifizieren,
Liefern einer Modulation oder Kodierung zum Generieren der Vielzahl von verschiedenen charakteristischen Stimulus-Signalen (Si),
Liefern zumindest einiger aus der Vielzahl von verschiedenen Stimulus-Signalen (Si) parellel, vorzugsweise gleichzeitig oder zumindest im Wesentlichen gleichzeitig.

6. Ein System, das angepasst ist zum Testen einer zu testenden optischen Vorrichtung - DUT - (10) mit m Eingängen, mit m = 1,2,3,...,M, und n Ausgängen, mit n = 1,2,3,...,N, wobei das System folgendes aufweist:
eine Signalanlegeeinheit (40), die angepasst ist zum Anlegen einer Vielzahl von verschiedenen charakteristischen Stimulussignalen (Si) an mindestens einen der m Eingänge,
eine Signalempfangseinheit (20), die angepasst ist zum Empfangen eines Antwortsignals (Ri) an zumindest einem der Ausgänge, und
einer Evaluierungseinheit (30), die angepasst ist zum Ermitteln oder Überprüfen einer Eigenschaft der DUT (10) durch Evaluieren des empfangengen Antwortsignals in Verbindung mit mindestens einem der angelegten Stimulus-Signale (Si) oder zumindest einem Teil davon,
wobei jedes charakteristische Stimulus-Signal (Si) ein einzigartiges Merkmal aufweist, welches es ermöglicht, jedes Stimulus-Signal - oder Teile davon - in jedem empfangenen Antwortsignal nachzuverfolgen und eindeutig zu identifizieren, wenn es vorhanden oder jenseits einer Detektionsschwelle ist.

7. Das System nach Anspruch 1, wobei die Evaluierungseinheit (30) angepasst ist, mindestens einen der folgenden Schritte auszuführen:
zumindest einen Teil des angelegten Stimulus-Signals in jedem empfangenen Antwortssignal zu identifizieren, und
eine quantitative Analyse des identifizierten Teils im Hinblick auf das angelegte Stimulus-Signal zu liefern.

8. Das System nach Anspruch 6 oder 7, wobei die Signalanlegeeinheit (40) angepasst ist, mindestens einen der folgenden Schritte auszuführen:
Anlegen einer Vielzahl von verschiedenen charakteristischen Stimulussignalen (Si), wobei jedes einen Trägeranteil und/oder einen Identifikationsanteit aufweist, wobei mindestens der Trägeranteil oder der Identifikationsanteil ein einzigartiges Merkmal aufweist, welches es ermöglicht, jedes Stimulussignal - oder Teile davon- in jedem empfangenen Antwortsignal eindeutig zu identifizieren,
Liefern einer Modulation oder Kodierung zum Generieren der Vielzahl von verschiedenen charakteristischen Stimulssignalen (Si),
Liefern midestens einiger aus der Vielzahl von charakteritischen Stimulussignalen (Si) parallel, vorzugsweise gleichzeitig oder mindestens im Wesentlichen gleichzeitig.

9. Ein Verfahren zum Ermitteln oder Überprüfen einer Eigenschaft einer zu testenden optischen Vorrichtung - DUT - (10) mit m Eingängen, mit m = 1,2,2,..., M, und n Ausgängen, mit n = 1,2,3,...,N, mit folgenden Schritten:
a) Empfangen eines Antwortsignals (Ri) an mindestens einem der n Ausgänge als Antwort auf eine Vielzahl von verschiedenen charakteristischen Stimulus-Signale (Si), welche an mindestens einen der m Eingänge angelegt werden, und
b) Ermitteln oder Überprüfen einer Eigenschaft der DUT (10) durch Evaluieren des empfangenen Antwortsignals in Verbindung mit mindestens einem der angelegten Stimulussignale (Si) oder zumindest einem Teil davon,
wobei jedes charakteristische Stimulussignal (Si) ein einzigartiges Merkmal aufweist, welches es ermöglicht, jedes Stimulus-Signal - oder Teile davon - in jedem empfangenen Antwortsignal nachzuverfolgen und eindeutig zu identifizieren, wenn es vorhanden oder jenseits einer Detektionsschwelle ist.

10. Ein Verfahren zum Testen einer zu testenden optischen Vorrichtung - DUT - (10) mit m Eingängen, mit m = 1,2,3,..., M, und n Ausgängen, mit n = 1,2,3,...,N, mit folgenden Schritten
a) Anlegen einer Vielzahl von verschiedenen charakteristischen Stimulssignalen (Si) an mindestens einen der m Eingänge,
b) Empfangen eines Antwortsignals (Ri) an mindestens einem der n Ausgänge, und
c)Ermitteln oder Überprüfen einer Eigenschaft der DUT (10) durch Evaluieren des empfangenen Antwortsignals in Verbindung mit mindestens einem der angelegten Stimulussignale (Si) oder zumindest einem Teil davon.
wobei in Schritt (a) jedes charakteristische Stimulussignal (Si) ein einzigartiges Merkmal aufweist, welches es ermöglicht, in Schritt (c) jedes entsprechende angelegte Stimulussignal (Si) in jedem empfangenen Antwortsignal (Ri) - nachzuverfolgen und eindeutig zu identifizieren, wenn es vorhanden oder jenseits einer Detektionschwelle ist.

11. Das Verfahren nach Anspruch 10, wobei Schritt (a) einen Schritt zum eindeutigen Modulieren oder Kodieren jedes Stimulussignals (Si) aufweist.

12. Das Verfahren nach Anspruch 10 oder 11, wobei in Schritt (a) zumindest einige aus der Vielzahl der verschiedenen charakteristischen Stimulussignalen (Si) parallel geliefert werden, vorzugsweise gleichzeitig oder zumindest im Wesentlichen gleichzeitig.

## Revendications

1. Système destiné à déterminer ou vérifier une propriété d'un dispositif optique en cours de test - DUT- (10) présentant m entrées, avec m = 1, 2, 3, ... M, et n sorties, avec n = 1, 2, 3, ... N, dans lequel une pluralité de différents signaux de stimulation de caractéristique (Si) sont appliquées au moins sur l'une des m entrées, le système comprenant :
une unité réceptrice de signal (20) destiné à recevoir un signal de réponse (Ri) sur au moins une des n sorties ; et
une unité d'évaluation (30) destinée à déterminer ou vérifier la propriété du DUT (10) en évaluant le signal de réponse reçu en association avec au moins un des signaux de stimulation appliqués (Si) ou au moins une indication de celui-ci ;
dans lequel chaque signal de stimulation de caractéristique (Si) présente une caractéristique unique permettant de repérer et d'identifier sans ambiguïté chaque signal de stimulation - ou partie de celui-ci - dans chaque signal de réponse reçu - s'il est présent ou au-delà d'un seuil de détection.

2. Système selon la revendication 1, dans lequel l'unité d'évaluation (30) est conçue pour identifier au moins une partie du signal de stimulation appliqué dans chaque signal de réponse reçu.

3. Système selon la revendication 2, dans lequel l'unité d'évaluation (30) est conçue pour fournir une analyse quantitative de la partie identifiée par rapport au signal de stimulation appliqué.

4. Système destiné à tester un dispositif optique en cours de test - DUT- (10) présentant m entrées, avec m = 1, 2, 3,...M, et n sorties, avec n = 1, 2, 3,...N, le système comprenant :
une unité d'application de signal (40) conçue pour appliquer une pluralité de différents signaux de stimulation de caractéristique (Si) à au moins une des m entrées ;
le système selon la revendication 1 ou l'une quelconque des revendications 2 et 3, pour déterminer ou vérifier une propriété du DUT (10) ;
dans lequel chaque signal de stimulation de caractéristique (Si) présente une caractéristique unique permettant de repérer et d'identifier sans ambiguïté chaque signal de stimulation - ou partie de celui-ci - dans chaque signal de réponse reçu - s'il est présent ou au-delà d'un seuil de détection.

5. Système selon la revendication 4, dans lequel l'unité d'application de signal (40) est conçue pour exécuter l'une des étapes suivantes :
appliquer une pluralité de signaux de stimulation de caractéristique (Si), chacun présentant une partie de porteuse et/ou une partie d'identification, avec au moins une partie de porteuse ou partie d'identification comprenant une caractéristique unique permettant d'identifier sans ambiguïté chaque signal de stimulation - ou partie de celui-ci - dans chaque signal de réponse reçu ;
fournir une modulation ou un codage pour générer la pluralité de différents signaux de stimulation de caractéristique (Si) ;
fournir au moins une partie de la pluralité de différents signaux de stimulation de caractéristique (Si) en parallèle, de préférence cocouramment ou au moins sensiblement cocouramment.

6. Système destiné à tester un dispositif optique en cours de test - DUT- (10) présentant m entrées, avec m = 1, 2, 3,...M, et n sorties, avec n = 1, 2, 3,...N, le système comprenant :
une unité d'application de signal (40) conçue pour appliquer une pluralité de différents signaux de stimulation de caractéristique (Si) à au moins une des m entrées ;
une unité réceptrice de signal (20) conçue pour recevoir un signal de réponse (Ri) sur au moins une des n sorties ; et
une unité d'évaluation (30) destinée à déterminer ou vérifier la propriété du DUT (10) en évaluant le signal de réponse reçu en association avec au moins un des signaux de stimulation appliqués (Si) ou au moins une indication de celui-ci ;
dans lequel chaque signal de stimulation de caractéristique (Si) présente une caractéristique unique permettant de repérer et d'identifier sans ambiguïté chaque signal de stimulation - ou partie de celui-ci - dans chaque signal de réponse reçu - s'il est présent ou au-delà d'un seuil de détection.

7. Système selon la revendication 6, dans lequel l'unité d'évaluation (30) est conçue pour exécuter au moins l'une des étapes suivantes :
identifier au moins une partie d'un signal de stimulation appliqué dans chaque signal de réponse reçu ; et
fournir une analyse quantitative de la partie identifiée par rapport au signal de stimulation appliqué.

8. Système selon les revendications 6 ou 7, dans lequel l'unité d'application de signal (40) est conçue pour exécuter au moins l'une des étapes suivantes :
appliquer une pluralité de signaux de stimulation de caractéristique (Si), chacun présentant une partie de porteuse et/ou une partie d'identification, avec au moins une partie de porteuse ou partie d'identification comprenant une caractéristique unique permettant d'identifier sans ambiguïté chaque signal de stimulation - ou partie de celui-ci - dans chaque signal de réponse reçu ;
fournir une modulation ou un codage pour générer la pluralité de différents signaux de stimulation de caractéristique (Si) ;
fournir au moins une partie de la pluralité de différents signaux de stimulation de caractéristique (Si) en parallèle, de préférence cocouramment ou au moins sensiblement cocouramment.

9. Méthode destinée à déterminer ou vérifier une propriété d'un dispositif optique en cours de test - DUT- (10) présentant m entrées, avec m = 1, 2, 3,...M, et n sorties, avec n = 1, 2, 3,...N, comprenant les étapes consistant à :
(a) recevoir un signal de réponse (Ri) sur au moins une des n sorties en réponse à une pluralité de différents signaux de stimulation de caractéristique (Si) appliqués à au moins une des m entrées ; et
(b) déterminer ou vérifier une propriété du DUT (10) en évaluant le signal de réponse reçu en association avec au moins un des signaux de stimulation appliqués (Si) ou au moins une indication de celui-ci ;
dans lequel chaque signal de stimulation de caractéristique (Si) présente une caractéristique unique permettant de repérer et d'identifier sans ambiguïté chaque signal de stimulation - ou partie de celui-ci - dans chaque signal de réponse reçu - s'il est présent ou au-delà d'un seuil de capacité de détection.

10. Méthode destinée à tester un dispositif optique en cours de test - DUT- (10) présentant m entrées, avec m = 1, 2, 3,...M, et n sorties, avec n = 1, 2, 3,...N, comprenant les étapes consistant à :
(a) appliquer une pluralité de différents signaux de stimulation de caractéristique (Si) à au moins une des m entrées ;
(b) recevoir un signal de réponse (Ri) sur au moins une des n sorties ; et
(c) déterminer ou vérifier une propriété du DUT (10) en évaluant le signal de réponse reçu en association avec au moins un des signaux de stimulation appliqués (Si) ou au moins une indication de celui-ci ;
dans lequel à l'étape (a) chaque signal de stimulation de caractéristique (Si) présente une caractéristique unique permettant à l'étape (c) de repérer et d'identifier sans ambiguïté chaque signal de stimulation appliqué respectivement (Si) dans chaque signal de réponse reçu (Ri) - s'il est présente ou au-delà d'un seuil de détection.

11. Méthode selon la revendication 10, dans laquelle l'étape (a) comprend l'étape consistant à moduler ou coder sans ambiguïté chaque signal de stimulation (Si).

12. Méthode selon les revendications 10 ou 11, dans laquelle à l'étape (a) au moins une partie de la pluralité des différents signaux de stimulation de caractéristique (Si) est pourvue en parallèle, de préférence cocouramment ou au moins sensiblement cocouramment.
